Europäisches Patentamt

European Patent Office

Office européen des brevets

(11) Publication number: **0 353 486**
A1

## (12) EUROPEAN PATENT APPLICATION

(21) Application number: 89112321.8

(22) Date of filing: 06.07.89

(51) Int. Cl.⁴: **B65B 55/10** , **B65B 3/30** , **G01F 11/22**

(30) Priority: 22.07.88 IT 6770188

(43) Date of publication of application:
07.02.90 Bulletin 90/06

(84) Designated Contracting States:
AT DE ES FR

(71) Applicant: ROBINO & GALANDRINO S.P.A.
Viale Italia, 78
I-14053 Canelli (Asti)(IT)

(72) Inventor: Robino, Giuseppe
Via Asti, 12
I-14053 Canelli (Asti)(IT)

(74) Representative: Modiano, Guido et al
MODIANO, JOSIF, PISANTY & STAUB
Modiano & Associati Via Meravigli, 16
I-20123 Milano(IT)

(54) **Dosage device particularly for dosing sterilizing substances used in the sterilization treatment of bottles, containers and the like.**

(57) The device comprises a pair of stator flanges (20-21) between which a distributor element (23) is interposed; the distributor element has at least one through cavity (27) the capacity whereof corresponds to each individual dose. The distributor element can perform angular movements in relation to the stator plates so as to pass from a position for loading the cavity with the sterilizing substance to a position for delivering the loaded substance. In the loading position, the cavity (27) of the distributor element (23) is aligned with a duct (15-16) in which the sterilizing substance circulates; in the delivery position, the cavity (27) is aligned with a duct (18-19) in which a propellant fluid is fed; the fluid is suitable to expel the dose of sterilizing substance contained in the cavity itself.

Fig. 3

# DOSAGE DEVICE PARTICULARLY FOR DOSING STERILIZING SUBSTANCES USED IN THE STERILIZATION TREATMENT OF BOTTLES, CONTAINERS AND THE LIKE

The present invention relates to a dosage device particularly for dosing sterilizing substances used in the sterilization treatment of bottles of ordinary and sparkling wines and of containers in general, which is performed by nebulizing such substances, such as for example sulphur dioxide, alcohols and the like.

Machines are already known which can deposit inside bottles and containers - before the filling step - a microlayer of sterilizing substance which is obtained by nebulizing said substance with a gaseous propellant such as sterile air, nitrogen, carbon dioxide or mixtures thereof.

Since the sterilizing substance must in no way affect the contents which are subsequently introduced and must at the same time be effective, the nebulization operation must be performed with extreme precision and essentially by rigorously complying with the individual dosages determined for said sterilizing substance. For example, if the substance at issue is constituted by sulphur dioxide, the dosage must be 1 cc of 8% aqueous solution of $S_2$ for each individual 750-cc bottle. Even slightly lower dosages are scarcely effective, and higher dosages can cause an appreciable alteration of the organoleptic qualities of the wine (or other contents) subsequently introduced into the bottle.

So far, membrane or piston dosage pumps have been used for such dosages, but they have turned out to be fully unreliable in terms of rigorous dosage, especially in machines with high operating speeds used in large-series productions.

In the case of pumps with an elastomer membrane, this unreliability mainly arises from the relative ease with which the mechanical characteristics of elastomers vary with temperature and/or humidity and most of all in the presence of some sterilizing substances such as indeed sulphur dioxide which, by interacting with said elastomers, significantly alter their molecular structure and therefore their original chemical and physical characteristics, with a consequent significant variation of the pump's delivery.

In the case of piston pumps, the unreliability arises from many factors and mostly from the state of wear of the pump and from the operating rate; the inertia of the liquids and the compressibility of the gases are decisive in terms of correct dosage.

Due to their intermittent operation, the above described dosage pumps, both the membrane kind and the piston kind, furthermore require the use of adequate valve means, the tightness whereof depends on elastomer gaskets which are also subject to variations in their original elastic characteristics due to the above described reasons.

Starting from the notion of the above described typical disadvantages of known dosage pumps, the aim of the present invention is to eliminate said disadvantages, and within the scope of this aim it has the important object of providing a dosage device to be used as a replacement of said pumps to ensure the correct delivery of individual doses of sterilizing substance which are rigorously constant and comply with the prescribed unit quantity of said substance at any operating rate of the machine, independently from environmental factors and from the chemical nature of the delivered substance.

Another object of the present invention is to provide a dosage device with a significantly simplified structure which is free from jammings and which is therefore adapted to ensure correct operation for long periods of time without requiring any maintenance.

A further important object of the present invention is to provide a dosage device which allows to vary the individual delivered doses, by means of simple and rapid operations, according to the substance being used and/or according to the capacity of the containers to be treated, and is thus easily adaptable to different operating requirements.

In order to achieve this aim, these important objects and others which will become apparent from the following detailed description, the present invention relates to a dosage device, characterized in that it comprises a pair of stator flanges between which a distributor element is interposed, said distributor element having at least one through cavity the capacity whereof corresponds to each individual dose, and in that the distributor element can perform angular movements, in relation to the stator plates, to pass from a position for loading said cavity with the sterilizing substance to a position for delivering the loaded dose of substance; said cavity of said distributor element being aligned, in the loading position, with a duct in which the sterilizing substance circulates continuously; said cavity being aligned, in the delivery position, with a duct in which a propellant fluid is intermittently or continuously fed, said propellant fluid being adapted to expel the dose of sterilizing substance contained in said cavity.

Further characteristics and advantages of the invention will become apparent from the following detailed description and with reference to the accompanying drawings, given only by way of non-limitative example, wherein:

figure 1 is a functional diagram of a bottle sterilizing machine with the dosage device according to the invention;

figure 2 is a plan view of the device;

figure 2a is a plan view of the distributor element;

figure 3 is an enlarged-scale axial sectional view of the device, taken along the line III-III of figure 2;

figure 4 is a plan view of the distributor element according to a varied embodiment;

figure 5 is a view, similar to figure 4, of another varied embodiment of said element.

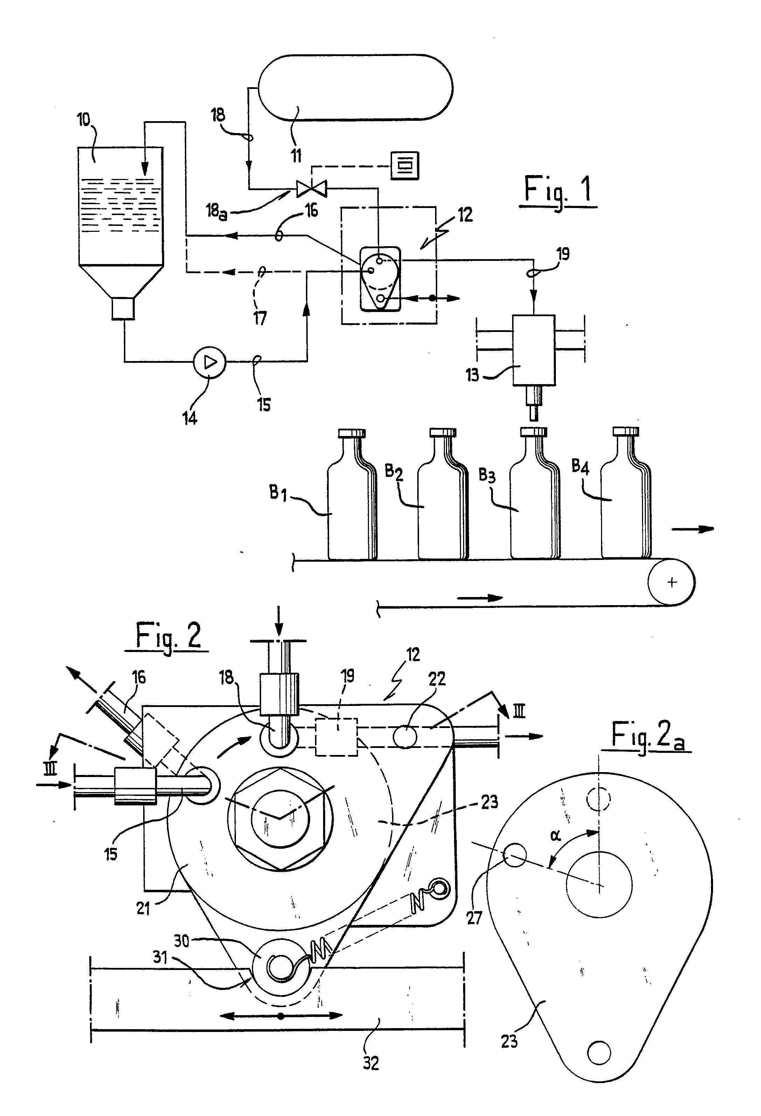

Initially with reference to figures 1 to 3, the reference numeral 10 indicates the tank of the sterilizing substance, which is constituted for example by an aqueous solution of sulphur dioxide with 8% $SO_2$; the reference numeral 11 indicates a source of pressurized propellant gas, for example nitrogen or sterile air, and the reference numeral 12 indicates the dosage device for the sterilizing substance according to the present invention, which is adapted to deliver a preset dose, for example equal to 1 cc, of said sterilizing substance. Each delivered dose is injected into each bottle B1, B2, B3, B4 etc, which passes below the head 13 in a per se known manner, by means of a nebulization or atomizer head 13, advantageously of the kind described in Italian patent application No. 54235-B/86 filed on 23-12-1986 in the name of the same Applicant.

The sterilizing substance is continuously fed into the dosage device 12 by means of a circulation pump 14, a delivery duct 15 and a return duct 16; a bypass branch 17 is associated with the duct 15, its function being described hereinafter. The propellant gas is in turn fed to the dosage device 12 by means of a delivery duct 18 and a time-controlled electric valve 18a which is synchronized with the movement of the distributor element, and is discharged, together with each dose of sterilizing substance, from a delivery duct 19 connected to the nebulization or atomizer head 13. As an alternative, the propellant gas may be fed continuously as well.

The dosage device 12 is substantially constituted by a pair of stator flanges 20-21 which are mutually connected by a dowel 22; a distributor element 23 is interposed therebetween and can perform angular movements in relation to said flanges. The stator flanges and the distributor element are advantageously assembled in a pack and are connected by a through pin 24 with which a spring 25 cooperates; said spring acts on the stator flange 20, reacts on a double nut 26 which is screwed onto a threaded portion of the shaft, adapted to ensure an adequate elastic contact pressure between the stator flange and the distributor element; said stator flanges are metallic, while the distributor element is preferably made of polymeric material; the dowel 22 prevents the mutual rotation of the flanges 20, 21.

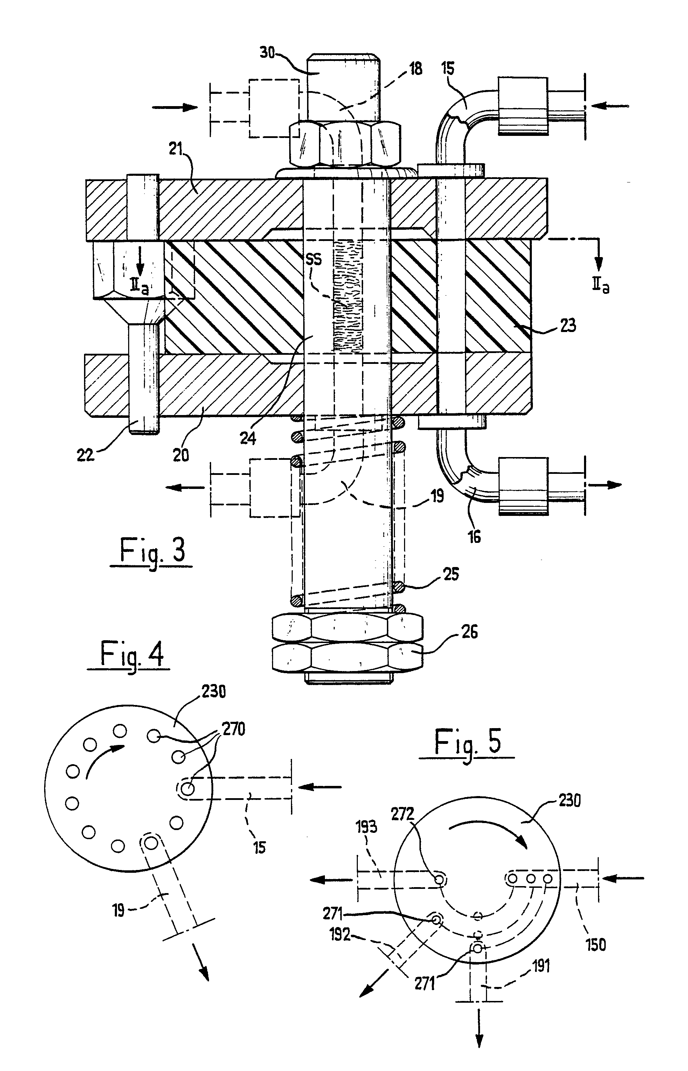

For the sake of greater clarity in description, the stator flanges 20, 21 are hereafter termed respectively lower flange and upper flange with respect to the distributor element 23 and with reference to the cross section of figure 3.

The delivery duct 15 of the sterilizing substance and the delivery duct 18 of the propellant gas are connected on the upper flange 21, and the lower flange bears the return duct 16 and the delivery duct 19 in alignment with said delivery ducts; the corresponding pairs of ducts 15-16 and 18-19 are spaced by an angular pitch $\alpha$ comprised for example between 30 and 90$^\circ$.

A through cavity 27 is correspondingly provided on the distributor element 23 and its capacity is equal to the volume of each dose to be delivered. Said cavity 27 is advantageously constituted by a hole arranged parallel to the axis of rotation of the distributor element and its diameter is equal to the diameters of the pairs of ducts 15-16 and 18-19, as clearly illustrated in figure 3.

The distributor element 23 can oscillate so as to move the cavity 27 from a position in which it is aligned with the ducts 15-16 to a position in which it is aligned with the ducts 18 and 19. For this purpose, the element 23 is provided with a roller 30 engaged by the notch 31 of a control rod 32 which is moved with a synchronized oscillating motion with the advancement pitch of the bottles B1, B2, B3, B4 etc; the excursion of said rod 32 is chosen so as to make the element 23 perform angular excursions having an amplitude $\alpha$.

Obviously, any suitable motor means may be used for actuating the rod 32, such as an electric motor or step motor, etc.

In the position in which it is aligned with the ducts 15-16, the through cavity 27 receives the sterilizing substance SS which circulates in said ducts, and is filled by said substance; any excess feed is bypassed by the duct 17. In the position in which the cavity 27 is aligned with the ducts 18 and 19, said substance is discharged into the delivery duct 19 by means of the action of the propellant fluid fed by the duct 18. Each oscillation of the element 23 is consequently matched by the delivery of a constant dose of sterilizing substance, the volume whereof is equal to the capacity of the cavity 27.

In the embodiment of figure 4, the distributor element 230 rotates instead of oscillating, and has a plurality of identical cavities 270 arranged on the same circumference and mutually spaced by an angular pitch equal to $\alpha$. The arrangement is such that each cavity 270 is loaded when it passes in alignment with the duct 15 and discharges its content when it passes in alignment with the delivery duct 19.

In the embodiment of figure 5, which also relates to a rotating distributor element 230, the cavities 271-272-273... are arranged along corresponding concentric circumferences, are fed by a single delivery duct 150 and are adapted to discharge their content into corresponding delivery ducts 191-192-193 etc, each whereof is aligned with a corresponding circumference; said embodiment allows the delivery of sterilizing substance to a corresponding plurality of nebulization or atomizer heads 13a-13b-13c which operate in parallel.

The details of execution and the embodiments may naturally vary extensively with respect to what is described and illustrated by way of non-limitative example without altering the concept of the invention and without thereby abandoning its scope.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Dosage device particularly for dosing sterilizing substances used in the sterilization treatment of bottles and the like, characterized in that it comprises a pair of stator flanges between which a distributor element is interposed, said distributor element having at least one through cavity the capacity whereof corresponds to each individual dose, and in that said distributor element can perform angular movements in relation to said stator flanges to pass from a position for loading the cavity with the sterilizing substance to a position for delivering the loaded substance; the cavity of said distributor element being aligned, in the loading position, with a duct in which the sterilizing substance circulates; said cavity being aligned, in the delivery position, with a duct into which a propellant fluid is fed, said fluid being adapted to expel the dose of sterilizing substance contained in said cavity.

2. Dosage device according to claim 1, characterized in that said distributor element oscillates and performs an angular excursion which allows the passage of its cavity from said loading position to said delivery position and vice versa.

3. Dosage device according to claim 1, characterized in that said stator flanges and said distributor element are assembled in a pack and are connected by a through dowel with which a variable-tension spring co-operates, said spring being adapted for ensuring an adequate elastic contact pressure between said flanges and said distributor element.

4. Dosage device according to claim 1, characterized in that one of said stator flanges is provided with the delivery ducts for the sterilizing substance and for the propellant gas, and the other stator flange is provided with the return duct for said substance and with the delivery duct for the dose expelled by said propellant gas; the corresponding pairs of ducts being spaced by an angular pitch comprised between 30 and 90°.

5. Dosage device according to claim 4, characterized in that said delivery and return ducts for the sterilizing substance are mutually aligned, and in that said delivery duct for the propellant and said delivery duct for the doses are mutually aligned.

6. Dosage device according to claims 1 and 2, characterized in that said stator flanges are metallic and in that said distributor element is made of polymeric material.

7. Dosage device according to claim 1, characterized in that said through cavity of the distributor element is constituted by a hole which is equal in diameter to the feed, return and delivery ducts.

8. Dosage device according to claims 1 and 2, characterized in that said distributor element is provided with a roller which is engaged by the notch of a control rod which is oscillable and synchronized with the advancement pitch of the bottles to be treated.

9. Dosage device according to claim 1, characterized in that said distributor element rotates and has a plurality of identical cavities which are arranged along the same circumference and are spaced by an angular pitch equal to the angular distance comprised between the delivery ducts of said sterilizing substance and the delivery duct of the propellant gas and the delivery duct of each dose.

10. Dosage device according to claim 1, characterized in that said distributor element is rotatable and provided with a plurality of cavities arranged on corresponding concentric circumferences, fed by a single delivery duct and adapted to discharge their content at corresponding delivery ducts, each whereof is aligned with a corresponding circumference.

Fig. 1

Fig. 2

Fig. 2a

Fig. 3

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A- 136 550 (CONTRAVES)<br>* Page 5, line 9 - page 9, line 30;<br>figures 7-10 * | 1-2,4-5<br>,7 | B 65 B 55/10<br>B 65 B 3/30<br>G 01 F 11/22 |
| A | --- | 9-10 | |
| Y | WO-A-7 901 074 (EX-CELL-O)<br>* Page 2, line 20 - page 3, line 19;<br>figure 1 *<br>----- | 1-2,4-5<br>,7 | |

TECHNICAL FIELDS
SEARCHED (Int. Cl.5)

B 65 B
A 61 L
G 01 F

The present search report has been drawn up for all claims

| Place of search | Date of completion of the search | Examiner |
|---|---|---|
| THE HAGUE | 12-10-1989 | NGO SI XUYEN G. |

EPO FORM 1503 03.82 (P0401)